Europäisches Patentamt

European Patent Office

Office européen des brevets

(11) Publication number : **0 172 751**
**B1**

# EUROPEAN PATENT SPECIFICATION

(45) Date of publication of patent specification :
19.10.88

(51) Int. Cl.⁴ : **E 05 C 17/20**

(21) Application number : 85305931.9

(22) Date of filing : 21.08.85

(54) Vehicle door restraint mechanism.

(30) Priority : 23.08.84 JP 175695/84
23.08.84 JP 175696/84
23.08.84 JP 127996/84 U

(43) Date of publication of application :
26.02.86 Bulletin 86/09

(45) Publication of the grant of the patent :
19.10.88 Bulletin 88/42

(84) Designated contracting states :
DE FR GB

(56) References cited :
FR-A- 1 195 711
US-A- 4 451 061

(73) Proprietor : **HONDA GIKEN KOGYO KABUSHIKI
KAISHA**
**1-1, Aoyama 2-chome**
**Minato-ku Tokyo 107 (JP)**

(72) Inventor : **Sasaki, Kiichi**
**No. 106, 31-8 Hon-cho**
**Wako-shi Saitama-ken (JP)**
Inventor : **Honda, Tadanori**
**268-14, Yanaze-machi**
**Utsunomiya-shi Tochigi-ken (JP)**
Inventor : **Saruwatari, Hidetoshi**
**1227-8, Hoshakuji Takanezawa-machi**
**Shioya-gun Tochigi-ken (JP)**
Inventor : **Higuchi, Kazuo**
**5-10, Hoshigaoka 2-chome**
**Utsunomiya-shi Tochigi-ken (JP)**

(74) Representative : **MacFarlane, John Anthony Christo-
pher et al**
**HASELTINE LAKE & CO. Hazlitt House 28, Southamp-
ton Buildings Chancery Lane**
**London WC2A 1AT (GB)**

Jouve, 18, rue St-Denis, 75001 Paris, France

## Description

This invention generally relates to door restraint mechanism for motor vehicles and is particularly concerned with such mechanism which can, in addition, be utilised for driving automotive equipment such as a seat belt reacher system.

A seat belt reacher system (see US-A-4 451 061) which will present one end of a seat belt to a person entering a vehicle is obviously highly desirable because, while the necessity of wearing a seat belt while driving is widely recognised, most public offices and private organisations have not been always successful in encouraging vehicle users to wear seat belts. It is therefore highly desirable in reducing the chances of injuries from car accidents to develop a seat belt reacher system which is comfortable for the vehicle occupants to use and both reliable and economical, otherwise the consumer will not desire to have his car equipped with such a system.

In designing a seat belt reacher system which is practical enough to be commercially acceptable, and which utilises a rotary arm for presenting one end of a seat belt to a person intending to occupy the vehicle, one of the problems is to find a suitable means for driving the rotary arm which carries one end of the seat belt. A power source such as an electric motor or a pneumatic or hydraulic actuator may be an obvious choice but it will increase the complexity of the system, thereby increasing the cost and reducing the reliability.

According to the present invention there is provided a vehicle door restraint mechanism including a check member characterised in that the check member is generally L-shaped having a first end portion pivoted to a vehicle body, a cam portion which cooperates with a gripping means secured to a door, a corner portion, and a second end portion which extends from the corner portion sideways away from the vehicle centre and which is connected to a control cable connected to equipment to be driven. The equipment that can be driven by this door restraint mechanism, in particular a seat belt reacher system, is thus driven in a simple manner utilising the motion of the check member which must take place as the door is opened and closed as a means for driving the equipment. This is particularly advantageous as regards a seat belt reacher system since the times for putting-on and removing a seat belt coincide with the times when the door is closed and opened, respectively. In addition, the door restraint mechanism functions as a normal door restraint mechanism in a satisfactory manner, and there is no undue increase in the force required to open and close the door. The mechanism can be reliable and durable. Utilising the door restraint mechanism in this way avoids the need for providing an additional external power source for driving the equipment.

Advantageously an elastic means is provided between the check member and the door so as to bias the check member relative to the door in a direction to close the door. This minimises the force required to close the door particularly when the door is near its fully closed state or when the control cable presents the greatest load in activating the equipment that it is driving.

Also advantageously the cam portion of the check member is tapered in such a manner that the thickness of the check member gradually reduces from a nodal point toward the portion of the door check member that co-operates with the gripping means when the door is fully opened. In this way, the increase in the force required fully to open the door where an elastic means is provided may be advantageously cancelled. It can also be advantageously arranged that the point of engagement between the elastic means and the check member is located opposite the point of engagement of the control cable with the check member with respect to a line connecting a pivot point on the first end portion of the check member with a point of engagement of the other end of the elastic means with the door. In this way the check member applies a side thrust to the gripping means always in one direction, thereby simplifying the structure for supporting the side thrust. The check member preferably has a detent groove at its substantially middle point, whereby the check member can perform well the function of a conventional check member.

For a better understanding of the invention and to show how the same may be carried into effect, reference will now be made, by way of example, to the accompanying drawings, in which :

Figure 1 is a sectional plan view of a door restraint mechanism, shown when the door is fully closed ;

Figure 2 is a view similar to Figure 1 but with some parts omitted and taken when the door is fully opened ;

Figure 3 is a longitudinal sectional view of part of the door restraint mechanism of Figures 1 and 2 ;

Figure 4 is a sectional view taken along line IV-IV of Figure 1 ;

Figure 5 is a sectional view taken along line V-V of Figure 4 ;

Figure 6 is a graph showing the load acting upon the door when a conventional door restraint mechanism is used ;

Figure 7 is a graph similar to that of Figure 6 but relevant to the present door restraint mechanism ; and

Figure 8 is a view similar to Figure 5 but showing a modified form.

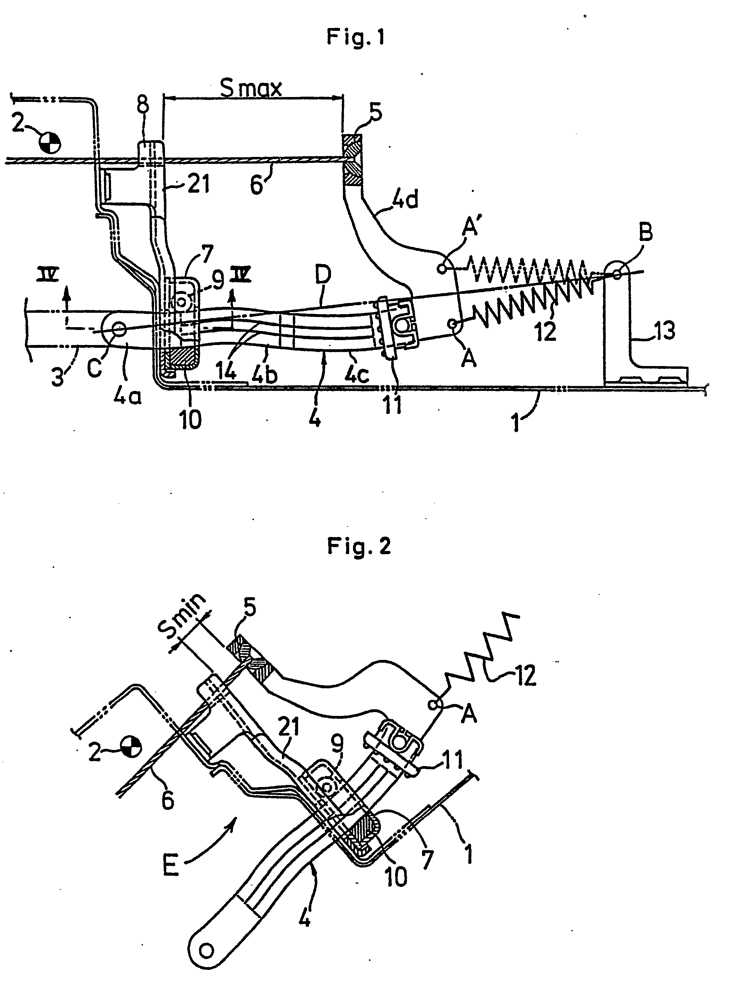

As shown in Figure 1, the door restraint mechanism includes a check member 4 having an external end portion 4a protruding outwardly from the door 1, a first tapered portion 4b which is gradually increased in thickness towards a middle part, a second tapered portion 4c which is gradually reduced in thickness away from the middle part, and an internal end portion 4d which extends outwardly (of the door) relative to the second tapered portion 4c so that the two portions 4c and 4d join one another through a corner portion and so that overall the check member 4 is in the shape of a letter « L ». The external end portion 4a is pivoted, at a pivotal centre C and in a known manner, to a link 3 fixedly secured to the vehicle body. The internal end portion 4d is provided with a spherical receiving surface 5 at its free end in which is engaged an end of a control cable 6.

A gripping assembly 7 fixedly secured to an internal surface of the door panel 1 co-operates with the tapered portion 4b and 4c of the check member (which portions together constitute a cam portion of the check member) to grip the check member 4 from above and below in a resilient manner as will be described in greater detail hereinafter. A guide slot 8 provided in the outward (with respect to the door) end of an extension 21 of the gripping assembly 7 guides the control cable 6.

Numeral 11 denotes a stopper of rubber material provided on an end of the body portion 4c adjacent the internal end portion 4d.

As shown in Figure 1, a bracket 13 is fixedly secured to the door panel 1 and there is a tension coil spring 12 stretched between an engagement point B on a free end of the bracket 13 and an engagement point A provided at the base of the internal end portion 4d of the check member 4. For a reason which will be explained later with respect to the engagement point between the control cable 6 and the end portion 4d, the engagement point A is on the other side of a line D connecting the pivotal centre C and the engagement point B.

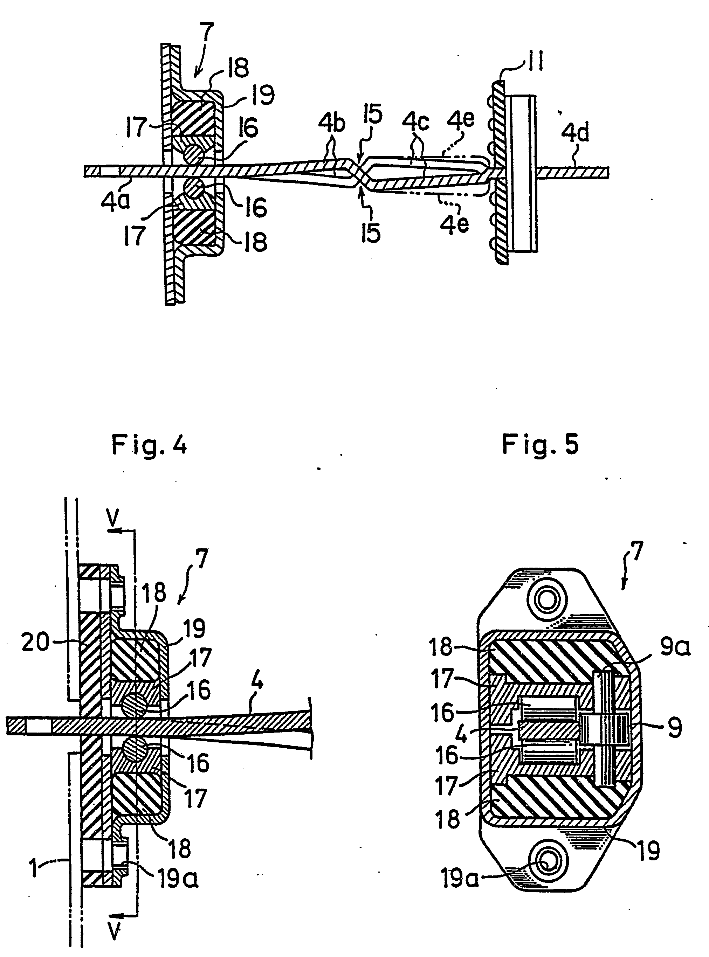

As shown in Figures 1 and 3, the first and the second tapered portions 4b and 4c are each defined into a central layer and side layers by slits 14 extending along the direction of length of these portions. It is by pulling this central layer and these side layers away from each other that the first and the second tapered portions 4b and 4c are formed. A detent groove 15, serving as a nodal point which as in any conventional door restraint mechanism keeps the door in a partially open state, is defined between the first and the second tapered portions 4b and 4c.

As most clearly shown in Figures 4 and 5, the gripping assembly 7 has a casing 19 and is mounted to door 1 by way of a rubber gasket 20 by fastening screws threaded into screw-threaded holes 19a provided in its casing 1. Rubber blocks 18 placed above and below in the casing 1 grip the check member 4 from above and below by way of rollers 16 supported by retainers 17. As the check member 4 travels horizontally through the gripping assembly 7, the function of a normal door restraint mechanism is produced owing to the shape given to the check member.

Operation is as follows.

As shown in Figure 1, when the door is fully closed, the control cable 6 is pulled to its maximum stroke Smax, and the biasing force of the tension coil spring 12 applied to the control cable 6 and the internal end portion 4d of the check member 4 assumes a relatively small value. The control cable 6 applies a counter clockwise moment to the check member 4 about its pivotal centre C, in the sense of Figure 1, but the first tapered portion 4b, of the check member 4, which constitutes a main body portion of the check member 4 is supported against this moment by a bearing roller 9 incorporated in the gripping assembly 7.

Figure 2 shows the door in a fully opened state, having been pivoted about its centre of rotation 2 in the direction indicated by an arrow E. In this state the pulling stroke of the control cable 6, as pulled by the check member 4, is at its minimum Smin. The control cable 6 is thus utilisable where it is required that its driving force is necessary only when the door is near its fully closed state, it being satisfactory that when the door is fully opened, as shown in Figure 2, the pulling force of the control cable 6 is extremely small. A suitable use is to operate a seat belt reacher system.

In the door fully opened state, the pulling force of the tension coil spring 12 is at its maximum, and therefore, since one end of the tension coil spring is engaged at the engagement point A, a moment in counter clockwise direction is still applied to the check member 4, as in the case in the door closed state, and the same bearing roller 9 still supports this moment. Therefore, in both the door fully closed and the door fully opened state a portion opposite the bearing roller 9 is not subjected to any load. However, if the check member end of the tension coil spring were engaged with the check member end portion 4d at a point A' located on the same side of the line D as the engagement point of the control cable 6 with the end portion 4d, a moment in the opposite direction would act upon the check member 4, particularly in the door completely opened state. In such a case, a substantial load would act upon a portion 10 in the gripping assembly 7 and opposed to the bearing roller 9, causing rapid wear in this portion. It might be possible to provide a structure similar to the bearing roller 9 in the portion 10, but this would not only complicate the structure of the main body of the gripping assembly, but also would cause some play between the check member 4 and the rollers then provided in the assembly and having the check member 4 interposed between them. Therefore, by engaging an end of the tension coil spring 12 to point A as shown in Figure 1, the side thrust force produced from the moment applied to the check member 4 is always supported by the roller bearing 9, whereby the structure of the gripping assembly 7 is simplified and there is very little play in the structure.

The control cable 6 and the tension coil spring 12 apply a moment to the check member 4 and the resultant side thrust from the check member 4 is supported by the bearing roller 9 which is provided in the gripping assembly 7 so as to be freely rotatable about a vertical axial line. As described above, according to this embodiment, because the moment acting upon the check member 4 is always counter-clockwise and the resultant side thrust is always directed in the same direction, the bearing roller 9 is necessary only on one side, as shown in Figure 3. Shaft portions 9a Figure 5 of the bearing roller 9 can be conveniently supported in holes provided in the retainers 17 that support the rollers 16, these holes having a common vertical axis.

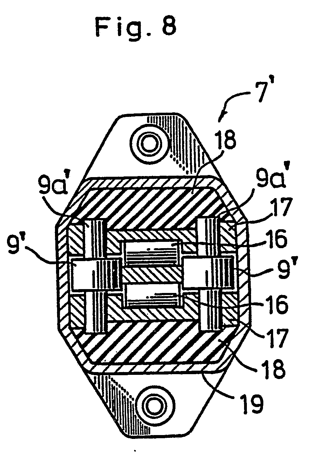

As already discussed, if the moment acting on the check member 4 is not always directed in the same direction for any reason, a pair of bearing rollers 9', 9' can be provided in the gripping assembly 7' one such roller on each side, as shown in Figure 8. In this case also, shaft portions 9a', 9a' of the bearing rollers 9', 9' may be received in holes provided in the retainer 17' the holes of each pair having a common vertical axis.

There will now be discussed the force required to open and close a door which incorporates a door restraint mechanism as just described in detail, in comparison with that required where a conventional door restraint mechanism is fitted.

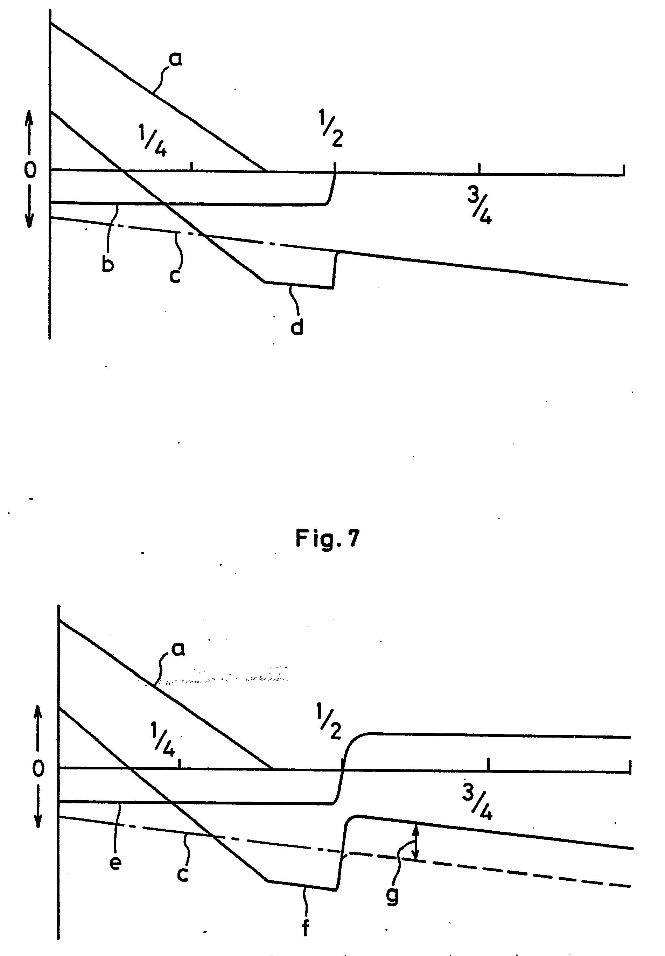

In the structure shown in Figures 1 to 5, the force required to open and close the door is determined by (1) the tension of the cable 6 ; (2) the biasing force arising from the taper on the check member 4 ; and (3) the spring force of the tension spring 12. The tension of the cable 6 consists of a door opening load which substantially linearly decreases from the fully closed state of the door to the 1/3 open state of the door in proportion to the opening angle of the door, as indicated by a solid line a in Figures 6 and 7. This is because the drive force transmitted by the cable 6 is necessary only when the door is near its fully closed state. The spring force of the tension spring 12 consists of a door closing load which substantially linearly increases from the fully closed state of the door to the fully opened state of the door in proportion to the opening angle of the door, as indicated by a one-dot chain line c in Figures 6 and 7.

In a conventional door restraint mechanism having a check member in which a portion 4e (chain dot lines in Figure 3) having a substantially uniform thickness is present instead of the second tapered portion 4c of the check member 4 described above in detail, the check member produces a door closing load of substantially uniform magnitude from the fully closed state of the door to the half open state of the door as indicated by a curve b in Figure 6. Therefore, the combined force of these three components applies a door opening load to the door when the door is near its fully closed state, and, as the door is opened wider from its half closed state to its fully open state, the door closing load becomes increasingly more dominant until the load acting on the door is accounted for by the door closing load of the tension spring 12. This load from the tension spring 12 gradually increases as the door is opened wider and force of a relatively great magnitude becomes necessary to open the door from its half open state to its fully open state.

In the structure described in detail, because the check member is tapered so that its thickness decreases from the nodal point in the middle towards the portion corresponding to the fully open state of the door, when the door is opened wider beyond its half open state, a door opening load is generated by the rollers 16 pressing upon the second tapered portion 4c. In other words, as shown in the graph of Figure 7, of all the load applied to the door, the contributions from the tension of the cable denoted by line a and the spring force of the tension spring denoted by line c are no different from those given in Figure 6, for conventional mechanism, but, when the present check member is used, a door opening load of substantially constant magnitude acts upon the door when the door is in any state between the half open state and the fully open state. Thus, the total force acting upon the door, as given by combining these contributions, is found as indicated by a curve f in Figure 7, and this door closing force, as far as the range between the half open state and the fully open state is concerned is less than the total force given in Figure 6 by an amount indicated by g in Figure 7. Therefore, when the door is opened beyond its half open state, the door that incorporates the present check member can be opened with a force less by g than a door incorporating a conventional check member.

Mention has been made of use of the cable 6 to operate a seat belt reacher system. A seat belt reacher system may be designed in a number of ways, but contemplated in this disclosure is one in which a rotary arm carrying an end of a seat belt at its free end is driven by a cable wound around a pulley secured to the base end of the rotary arm at its one end and attached at its other end to the free end of a check member of a door restraint mechanism. It will be appreciated that the driving cable can be the cable 6 described above so that the force applied to the door to close it is transmitted to the seat belt reacher system through this driving cable and the rotary arm, by rotating forwardly, presents one end of a seat belt which is attached to the free end of the rotary arm near to a person entering the vehicle so that the seat belt may be readily accessible to him and he may be encouraged to wear the seat belt when he has closed the door and is ready to move off in the car.

**Claims**

1. A vehicle door restraint mechanism including a check member (4) characterised in that the check member (4) is generally L-shaped having a first end portion (4a) pivoted to a vehicle body, a cam portion (4b, 4c) which cooperates with a gripping means (7) secured to a door (1), a corner portion, and a second end portion (14d) which extends from the corner portion sideways away from the vehicle centre and which is connected to a control cable (6) connected to equipment to be driven.

2. A door restraint mechanism as claimed in claim 1, wherein an elastic means (12) is provided between the check member (4) and the door (1) so as to bias the check member (4) relative to the door (1) in a direction to close the door (1).

3. A door restraint mechanism as claimed in claim 2, wherein the elastic means is a tension spring (12) engaged between the corner portion of the check member (4) and the door (1).

4. A door restraint mechanism as defined in claim 3, wherein the point of engagement (A) between the tension spring (12) and the check member (4) is located opposite the point of engagement of the control cable (6) with the check member (4) with respect to a line (D) connecting a pivot point (C) on the first end portion (4a) of the check member (4) with a point of engagement (B) of the other end of the tension spring (12) with the door (1).

5. A door restraint mechanism as claimed in any one of the preceding claims, wherein the gripping means (7) comprises at least one vertical roller (9) for supporting a side thrust of the check member (4).

6. A door restraint mechanism as claimed in any one of preceding claims, wherein the cam portion (4b, 4c) of the check member (4) is tapered in such a manner that the thickness of the check member (4) gradually reduces from a nodal point (15) toward the portion (4c) of the door check member that co-operates with the gripping means (7) when the door is fully opened.

7. A door restraint mechanism as claimed in claim 6, wherein the check member (4) is defined into a middle layer and side layers by a pair of slits extending along the axial length of the cam portion (4b, 4) ; and wherein the taper is formed by pulling by the middle layer and the side layers away from each other.

8. A door restraint mechanism as claimed in any one of the preceding claims, wherein the cam portion (4b, 4c) includes a detent groove (15), substantially at its middle point.

9. A door restraint mechanism as claimed in any one of the preceding claims, wherein the gripping means (7) including a pair of horizontal rollers (16, 16) biased towards the upper and lower surfaces of the cam portion (4b, 4c) of the check member (4).

10. A door restraint mechanism as claimed in any one of the preceding claims, wherein the equipment to be driven is a seat belt reacher system.

**Patentansprüche**

1. Hemmeinrichtung für eine Fahrzeugtür mit einem Arretierglied (4), dadurch gekennzeichnet, daß das Arretierglied (4) im wesentlichen L-förmig ist und einen an einem Fahrzeugkörper angelenkten ersten Endteil (4a), einen mit einer an einer Tür (1) festgelegten Einspanneinrichtung (7) zusammenwirkenden Nockenabschnitt (4b, 4c), einen Eckabschnitt und einen zweiten Endabschnitt (14d) aufweist, welcher sich vom Eckabschnitt seitlich von der Fahrzeugmitte weg erstreckt und welcher an ein mit einer anzutreibenden Einrichtung verbundenes Steuerseil (6) angeschlossen ist.

2. Türhemmeinrichtung nach Anspruch 1, worin zwischen dem Arretierglied (4) und der Tür (1) eine das Arretierglied (4) relativ zur Tür (1) in einer die Tür (1) schließenden Richtung belastende elastische Einrichtung (12) vorgesehen ist.

3. Türhemmeinrichtung nach Anspruch 2, worin die elastische Einrichtung eine zwischen dem Eckabschnitt des Arretiergliedes (4) und der Tür (1) eingespannte Zugfeder (12) ist.

4. Türhemmeinrichtung nach Anspruch 3, worin der Angriffspunkt (A) zwischen der Zugfeder (12) und dem Arretierglied (4), bezogen auf eine den Schwenkpunkt (C) am ersten Endteil (4a) des Arretiergliedes (4) mit dem Angriffspunkt (B) des anderen Endes der Zugfeder (12) an der Tür (1) verbindende Linie (D), dem Angriffspunkt des Steuerseils (6) am Arretierglied (4) gegenüberliegt.

5. Türhemmeinrichtung nach irgendeinem der vorhergehenden Ansprüche, worin die Einspanneinrichtung (7) zumindest eine vertikale Rolle (9) zum Abstützen eines Seitenschubes des Arretiergliedes (4) aufweist.

6. Türhemmeinrichtung nach irgendeinem der vorhergehenden Ansprüche, worin der Nockenabschnitt (4b, 4c) des Arretiergliedes (4) in solcher Weise spitz zuläuft, daß die Dicke des Arretiergliedes (4) sich von einem Knotenpunkt (15) ausgehend allmählich zum Abschnitt (4c) des Türarretiergliedes hin verringert, welches bei voll geöffneter Tür mit der Einspanneinrichtung (7) zusammenwirkt.

7. Türhemmeinrichtung nach Anspruch 6, worin das Arretierglied (4) durch ein Paar von sich in axialer Länge des Nockenabschnittes (4b, 4) erstreckenden Schlitzen in eine Mittelstrebe und Seitenstreben unterteilt ist und worin das spitze Zulaufen durch Auseinanderziehen der Mittelstrebe und der Seitenstreben voneinander erzielt ist.

8. Türhemmeinrichtung nach irgendeinem der vorhergehenden Ansprüche, worin der Nockenabschnitt (4b, 4c) im wesentlichen in seinem Mittelpunkt eine Rastnut (15) aufweist.

9. Türhemmeinrichtung nach irgendeinem der vorhergehenden Ansprüche, worin die Einspanneinrichtung (7) ein Paar horizontaler Rollen (16, 16) aufweist, die nachgiebig an der Oberseite und an der Unterseite des Nockenabschnittes (4b, 4c) des Arretiergliedes (4) anliegen.

10. Türhemmeinrichtung nach irgendeinem der vorhergehenden Ansprüche, worin die anzutreibende Einrichtung ein Darreichsystem für einen Sitzgurt ist.

**Revendications**

1. Arrêtoir de porte de véhicule automobile comportant un organe d'arrêt (4) caractérisé en ce que l'organe d'arrêt (4) présente globalement la forme d'un L ayant une première partie d'extrémité (4a) pivotant sur un châssis de véhicule, une partie formant came (4b, 4c) qui coopère avec un moyen d'accrochage (7) fixé à une porte (1), une partie en coin, et une seconde partie d'extrémité (14d) qui s'écartent de la partie en coin en s'éloignant du centre de véhicule et qui est relié à un câble de commande (6) relié à un équipement à actionner.

2. Arrêtoir de porte de véhicule automobile selon la revendication 1, dans lequel un moyen élastique (12) est prévu entre l'organe d'arrêt (4) et la porte (1), de façon à solliciter l'organe d'arrêt (4) par rapport à la porte (1) dans une direction de fermeture de la porte (1).

3. Arrêtoir de porte de véhicule automobile selon la revendication 2, dans lequel le moyen élastique est un ressort de tension (12) s'engageant entre la partie en coin de l'organe d'arrêt (4) et la porte (1).

4. Arrêtoir de porte selon la revendication 3, dans lequel le point d'engagement (A) entre le ressort de tension (12) et l'organe d'arrêt (4) est situé à l'opposé du point d'engagement du câble de commande (6) avec l'organe d'arrêt (4) par rapport à une ligne (D) reliant un point de pivotement (C) sur la première partie d'extrémité (4a) de l'organe d'arrêt (4), à un point d'engagement (B) de l'autre extrémité du ressort de tension (12) avec la porte (1).

5. Arrêtoir de porte de véhicule automobile selon l'une quelconque des revendications précédentes, dans lequel le moyen d'accrochage (7) comprend au moins un rouleau vertical (9) pour résister à une poussée latérale de l'organe d'arrêt (4).

6. Arrêtoir de porte de véhicule automobile selon l'une quelconque des revendications précédentes, dans lequel la partie formant came (4b, 4c) de l'organe d'arrêt (4) est biseautée de telle manière que l'épaisseur de l'organe d'arrêt (4) décroît progressivement entre un point nodal (15) et la partie (4c) de l'organe d'arrêt de porte, qui coopère avec le moyen d'accrochage (7) lorsque la porte est totalement ouverte.

7. Arrêtoir de porte selon la revendication 6, dans lequel l'organe d'arrêt (4) est défini en une couche médiane et en des couches latérales par une paire de fentes s'étendant suivant la longueur axiale de la partie formant came (4b, 4c) ; et dans lequel le biseautage est formé par écartement de la couche médiane et des couches latérales.

8. Arrêtoir de porte de véhicule automobile selon l'une quelconque des revendications précédentes, dans lequel la partie formant came (4b, 4c) comporte une gorge de détente (15) située sensiblement en son milieu.

9. Arrêtoir de porte de véhicule automobile selon l'une quelconque des revendications précédentes, dans lequel le moyen d'accrochage (7) comporte une paire de rouleaux horizontaux (16, 16) sollicités vers les surfaces supérieure et inférieure de la partie formant came (4b, 4c) de l'organe d'arrêt (4).

10. Arrêtoir de porte de véhicule automobile, selon l'une quelconque des revendications précédentes, dans lequel l'équipement à actionner est un système de rapprochement de ceinture de sécurité.

## Fig. 1

## Fig. 2

Fig. 4

Fig. 5

**Fig. 7**

## Fig. 8